# EUROPEAN PATENT APPLICATION

(11) **EP 4 807 333 A1**
(43) Date of publication of application: **16.09.2026**
(21) Application number: 25162676.8
(22) Date of filing: 10.03.2025
(51) Int. Cl.: G01M 3/16, H01M 10/48

(54) **LIQUID LEAKAGE DETECTOR AND BATTERY SYSTEM INCLUDING THE SAME**

(71) Applicant: SAMSUNG SDI CO., LTD., Yongin-si, Gyeonggi-do 17084 (KR)
(72) Inventor: Gombats, Ilya, 8020 Graz (AT); Jammernegg, Katrin, 8052 Graz (AT); Frank, Carina, 8010 Graz (AT)
(74) Representative: Gulde & Partner

(57) **Abstract**

The present disclosure refers to a liquid leakage detector (10) for detecting liquid in a battery system. The flexible flat cable, FFC, (20), including: at least a first electrical conductor (22) and a second electrical conductor (24) extending parallel to each other; an insulating layer (26) at least partially enclosing the first and/or the second electrical conductor (22, 24). An electrical resistor (30) located at a first end portion (E1) of the FFC (20) electrically connected with the first electrical conductor (22) and the second electrical conductor (24) at the first end portion (E1). A first opening (27) in the insulating layer (26) providing a first exposed portion (23) of the first electrical conductor (22) with respect to the insulating layer (26) and a corresponding second opening (28) in the insulating layer (26) providing a second exposed portion (25) of the second electrical conductor (24) with respect to the insulating layer (26). A detection unit (40) electrically connected to the first electrical conductor (22) and the second electrical conductor (24) at a second end portion (E2) opposite to the first end portion (E1), the detection unit (40) configured to detect liquid based on identifying an electrical current flowing between the first exposed portion (23) and the second exposed portion (25) via the liquid.

## Description

### Field of the Disclosure

Embodiments of the present disclosure relate to a liquid leakage detector and a battery system including the same.

### Technological Background

A battery system may also include a battery management system (BMS), which is any suitable electronic system that is configured to manage a rechargeable battery cell, battery module, and battery pack, such as by protecting the battery cells from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or coolant liquid pressure), and current.

An active or passive thermal management system may be included to provide thermal control of the battery pack, to safely use the at least one battery module by efficiently emitting, discharging, and/or dissipating heat generated from its rechargeable batteries. If the heat emission/discharge/dissipation is not sufficiently performed, temperature deviations may occur between respective battery cells, such that the at least one battery module may no longer generate a desired (or designed) amount of power. In addition, an increase of the internal temperature can lead to abnormal reactions occurring therein, and thus charging and discharging performance of the rechargeable battery deteriorates and the life-span of the rechargeable battery is shortened. Thus, cell cooling for effectively emitting/discharging/dissipating heat from the cells is required.

The interface to a cooling system is more complex, as a cooling apparatus is in direct contact with electrical components of the battery cell. In the case of battery cells with a low height and sufficiently thick cell walls, it may be sufficient to simply make contact with the bottom of the battery cells via a cooling plate. Should this prove inadequate, supplementary heat conduction elements must be incorporated between the battery cells to facilitate the transfer of heat to the cooling plate. The use of fluid-conducting cooling plates between the battery cells has been demonstrated to be an effective method, as the heat conduction path from the interior of the battery cell to the cooling fluid is relatively short, resulting in a high degree of temperature homogeneity within the battery cell. An alternative approach to cooling is arrester cooling. In this method, the interior of the battery cell is cooled directly via electrodes. For example, pouch battery cells are well-suited for this type of cooling, as they have flat and therefore relatively easy-to-contact electrodes. The waste heat from the battery cells is directed into a cooling plate. There, either cooling water or an evaporating refrigerant absorbs the heat and dissipates it to the environment via the vehicle's cooling or refrigeration system.

Supplying the battery system with coolant liquid, e.g., water, causes a risk that the coolant liquid may leak from the cooling channels or coolant interfaces in the battery system, e.g. in a battery pack or even within a battery module. Therefore, it is of importance that such leakage events are rapidly detected to prevent harmful damaging of the battery system and operating units in the battery system.

For preventing the above, liquid leakage detectors are included in the battery system to detect leaked liquid like coolant liquid leaked from coolant manifold and/or coolant interfaces. The conventional solution is to use cables with open connectors at end portions. The liquid leakage detectors contain a resistor in parallel to the open ends that are provided to detect a liquid (e.g., water) connecting the open ends thereby forming a parallel liquid resistor reducing the overall resistance which can be detected by current/resistance processing.

However, the installation of the liquid leakage detectors in the battery system is cumbersome in terms installation and in terms of reserving sufficient space for the detector and the harness in the housing. An easier installation process and a more space-saving process due to a different concept may be advantageous.

A further difficulty is to provide reasonable detection thresholds to discriminate between mere humidity, e.g. condensed water, and truthful liquid leakage events where amounts of leakage liquid have escaped from the cooling manifold.

The above information is only described for better understanding of the present disclosure but does not intend to limit the disclosure as described in the following sections.

### Summary of Invention

The invention is defined by the appended claims. The description that follows is subjected to this limitation. Any disclosure lying outside the scope of the claims is only intended for illustrative as well as comparative purposes.

According to an embodiment, a liquid leakage detector for detecting liquid in a battery system is provided. The liquid leakage detector includes a flexible flat cable, FFC. The FFC includes a first electrical conductor and a second electrical conductor extending parallel to each other. The FFC includes an insulating layer at least partially enclosing the first and/or the second electrical conductor. The liquid leakage detector further includes an electrical resistor located at a first end portion of the FFC electrically connected with the first electrical conductor and the second electrical conductor at the first end portion. Further, the liquid leakage detector includes a first opening in the insulating layer providing a first exposed portion of the first electrical conductor with respect to the insulating layer and a second opening in the insulating layer providing a second exposed portion in the second electrical conductor with respect to the insulating layer. Moreover, the liquid leakage detector includes a detection unit electrically connected to the first electrical conductor and the second electrical conductor at a second end portion opposite to the first end portion, the detection unit configured to detect liquid based on identifying an electrical current flowing between the first exposed portion and the second exposed portion via the liquid.

According to an embodiment, a battery system is provided including a plurality of battery cells accommodated within a housing and the above-mentioned liquid leakage detector within the housing.

Further embodiments of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic view of a liquid leakage detector according to an embodiment;
FIG. 2 illustrates a cross section view of a flexible flat cable according to section A-A of FIG. 1 according to an embodiment;
FIG. 3 illustrates a cross section view of a flexible flat cable to section A-A of FIG. 1 according to another embodiment;
FIG. 4 illustrates a cross section view of a flexible flat cable according to section A-A of FIG. 1 according to another embodiment;
FIG. 5 illustrates a cross section view of a flexible flat cable according to section A-A of FIG. 1 according to another embodiment;
FIG. 6 illustrates a cross section view of a flexible flat cable according to section A-A of FIG. 1 according to another embodiment;
FIG. 7 illustrates a schematic view of a liquid leakage detector according to another embodiment;
FIG. 8 illustrates a schematic view of a liquid leakage detector according to another embodiment; and
FIG. 9 illustrates a schematic view of a battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the embodiments and features of the present disclosure to those skilled in the art. In the drawings, the relative sizes of elements, layers, and regions may be exaggerated for clarity.

As used herein, the term "and/or" includes any and all combinations of one or more of the associated listed items. Expressions such as "at least one of", when preceding a list of elements, modify the entire list of elements and do not modify the individual elements of the list. Further, the use of "may" when describing embodiments of the present disclosure refers to " one or more embodiments of the present disclosure".

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. Further, the various components of these devices may be implemented on a flexible printed circuit film, a tape carrier package (TCP), a printed circuit board (PCB), or formed on one substrate. The electrical connections or interconnections described herein may be realized by wires or conducting elements, e.g., on a PCB or another kind of circuit carrier. The conducting elements may include metallization, e.g. surface metallizations and/or pins, and/or may include conductive polymers or ceramics. Further electrical energy might be transmitted via wireless connections, e.g. using electromagnetic radiation and/or light.

Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like.

Also, a person of skill in the art should recognize that the functionality of various computing devices may be combined or integrated into a single computing device, or the functionality of a particular computing device may be distributed across one or more other computing devices without departing from the scope of the exemplary embodiments of the present disclosure.

### General Concept

According to an embodiment of the present disclosure, a liquid leakage detector for detecting leaked liquid in a battery system is provided. The liquid leakage detector includes a flexible flat cable, FFC. The FFC includes a first electrical conductor and a second electrical conductor extending parallel to each other. The FFC further includes an insulating layer at least partially enclosing the first and/or the second electrical conductor. The liquid leakage detector further includes an electrical resistor located at a first end portion of the FFC electrically connected with the first electrical conductor and the second electrical conductor at the first end portion. Further, the liquid leakage detector includes a first opening in the insulating layer providing a first exposed portion of the first electrical conductor with respect to the insulating layer and a second opening in the insulating layer providing a second exposed portion in the second electrical conductor with respect to the insulating layer. Moreover, the liquid leakage detector includes a detection unit electrically connected to the first electrical conductor and the second electrical conductor at a second end portion opposite to the first end portion, the detection unit configured to detect liquid based on identifying an electrical current between the first exposed portion and the second exposed portion via the liquid.

In other words, the FFC may referred to as a cable that is flat and is flexible, i.e., has flexible characteristics. The FFC may include multiple flat conductors (at least two electrical conductors are needed). The insulating layer may be a flexible plastic coating. The electrical resistor may be coupled/connected for example by soldering the electrical resistor at the first end portion. The first/second end portions may also be referred to as first/second ends. In an event of liquid leakage like water leakage or water-containing liquid leakage used for example as coolant, the leaked liquid covers and connects the exposed portions of the electrical conductors so to form an electrical resistor, e.g. liquid resistor, parallel to the electrical resistor interconnected between the first and second connectors at the first end. Thus, applying a voltage to the resistors, an electrical current can as well flow between the exposed portions so that total resistance is reduced. This can be detected, e.g., by determining a resistance drop (current increase), of the parallel resistors in response to applying a voltage to the resistors. The detection unit may include processing units (e.g. processors like microprocessor), for example to determine resistance or to determine current (current sensing) to detect electrical current in response to a predefined voltage. Further details of the detection unit and the liquid detection methods are known from liquid detection sensors. The resistance value of the electric resistor may be on similar value as the resistance value of the liquid connection (liquid resistor) between the exposed portions to increase sensitivity. i.e. obtain significant resistance drop, for resistance/current measurements. In embodiments, the FFC can be made relatively long, e.g., 1m, 2 m, or more.

Accordingly, a liquid leakage detector is provided based on using an FFC having exposed portions therein to detect leaked liquid in a battery system. The liquid leakage detector has an effect in that due to the reduced thickness and the flexibility of the FFC, the liquid leakage detector including the FFC is easy to install in the battery system compared to prior art solutions and the FFC allows a simple integration and installation while requiring less space. In addition, the FFC is robust against bending during the installation simplifying the installation process.

According to an embodiment, a cross section of the FFC and/or the first and second electrical conductors is rectangular including a width and a height, wherein the height is shorter than the width. Thus, this explicit cross section ensures that the FFC is relatively thin and requires less vertical space. This improves and eases an integration of the liquid detector in a housing of the battery system.

According to an embodiment, the first opening and the second opening are formed on a same side. The same side may be an upper side of the FFC. In these cases, the exposed portions have a same height position. Thus, the exposed portions are likely covered by the leaked liquid at the same leakage event. As well, when located in the upper portion, a threshold height with respect to a bottom surface may be defined or ensured by the upper position. Thus, a certain amount of liquid is needed to establish a liquid connection (establish a liquid resistor) between the exposed portions.

According to an embodiment, a water-soluble coating covers the first exposed portion and the second exposed portion. A water-soluble coating is a layer using a material that can be dissolved by water or water-based liquid when such liquid or water-containing liquid contacts the water-soluble coating. Thus, due to the water-soluble coating, normal humidity may not be able to dissolve the water-soluble coating, i.e., may not be sufficient to dissolve the water-soluble coating, while a (e.g. sufficient) amount leaked coolant liquid may dissolve the water-soluble coating to allow the exposed portions to be electrically connected through the leaked liquid. Therefore, false leakage detection may be avoided by use of the water-soluble coating in cases where for example only small amounts of liquids are present due to, e.g., liquid condensation or humidity. In other words, a detection threshold is established avoiding false detection caused by normal humidity and normal condensed water or for very minor leakage cases. The water-soluble coating may further have an effect of protection of the exposed portions. The coolant liquid may refer to water or water-based liquid.

According to an embodiment, the water-soluble coating includes a polyvinyl alcohol, PVA, tape. The PVA tape is a water-soluble thermoplastic that can be attached with ease on the conductors as a film or as a coating. That is, the PVA tape can be easily applied to the openings, i.e. the exposed portions. The PVA tape is very robust against humidity and thus safely prevents false detection of normal humidity conditions or small amounts of liquid leakage.

According to an embodiment, an ion releasing material is provided at or in the openings, the ion releasing material configured to release ions to the liquid when being dissolved by the liquid. The ion releasing material may have the property of releasing ions when being in contact with leaked coolant liquid like water or water-containing liquids. Since the released ions increase the electrical conductivity of the liquid, the resistance of the liquid connection, e.g., liquid resistor, is reduced. This, for example, allows as well to use an electrical resistance with a lower resistance value at the first end of the FFC. The ion releasing material may improve detection rapidity. The ion releasing material may be provided in a local environment of the openings or therein.

According to an embodiment, the ion releasing material is disposed between the water-soluble coating and the respectively exposed portions. Thus, when or once the water-soluble coating is dissolved, the ions in the ion releasing material are released to the liquid. This ensures that the resistance of the liquid resistor is only reduced in the event that the water-soluble coating is dissolved and not before. Thus, the prevention of false leakage due to the water-soluble coating is maintained while the ion releasing material improves detection rapidity.

According to an embodiment, the ion releasing material includes a salt material. A salt material or salt ions may for example be sodium chloride, i.e. NaCl, or potassium chloride, i.e. KCI. Thus, the ions may be salt ions that are released into the liquid to reduce the resistivity.

According to an embodiment, the ion releasing material is a coating and/or a powder. Thus, the ion releasing material may be easily applied to the electrical conductor.

According to an embodiment, the ion releasing material is included in the water-soluble coating. In this case, when the water-soluble coating is dissolved, the ions are directly released in the same dissolving process. This results in an even faster response for detecting leaked liquid. Therefore, a faster detection of leaked liquid may be achieved.

According to an embodiment, a corrosion protection layer is directly disposed on the respective exposed portions of the first and second electrical conductors. Therefore, in this case, a corrosion of the exposed portions can be prevented. Thus, metals for the conductors with short oxidations can be used. For example, aluminum may be used as metal material of the electrical conductors.

According to an embodiment, the corrosion protection layer is a coating including at least one of gold, tin and/or nickel. These materials have excellent corrosion protection. Therefore, corrosion can be more effectively prevented.

According to an embodiment, the first and second electrical conductors each includes a plurality of openings along the cable direction respectively providing a plurality of pairs of exposed portions. Thus, due to the displacement, it can be assumed that normal humidity or very small amounts leaked liquid cannot establish a conductive connection between the exposed portions due to the increased distance. For example, it may not be sufficient to form an electrical connection in such case of small liquid amounts, while a larger amount of leaked coolant liquid may be able to electrically connect the displaced exposed portions. Thus, false leakage detection may be avoided by use of the displacement position. In other words, a threshold is provided avoiding false detection caused by normal humidity, normal condensed water and or minor leakage amount.

According to an embodiment, the first and second electrical conductors each includes a plurality of openings along the cable direction thereby providing a plurality of pairs of exposed portions. Therefore, a plurality of sensing locations can be provided with a single resistor and a single FFC. Therefore, the amount of wiring and resistors can be drastically reduced while still being capable of detecting liquid leakage at various positions in the battery system. No further addition of multiple detectors is required. I.e., while in the prior art the amount of wiring scales with the number of sensing locations, in the present disclosure only one FFC and one resistor is required to detect liquid at different locations.

According to an embodiment, the resistor has a resistance value between 100kΩ and 300kΩ. Thus, the resistance value and the amount of resistance can be reduced compared to prior art solutions.

According to another aspect of the disclosure, a battery system includes a plurality of battery cells accommodated within a housing and the above-mentioned liquid leakage detector within the housing. The same advantages apply as described with respect to the above embodiments and it is referred to the above disclosure.

### Specific Embodiments

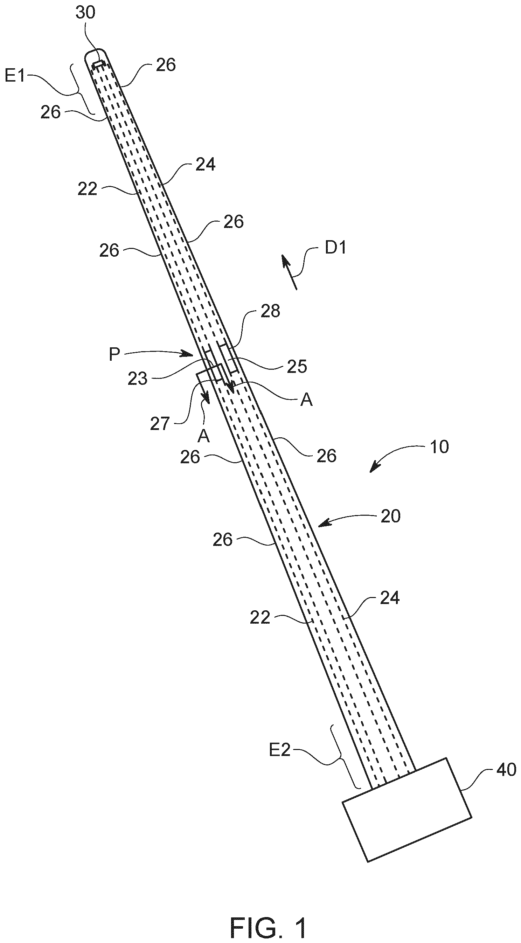

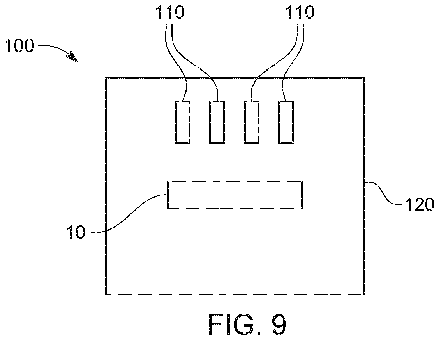

FIG. 1 illustrates a schematic view of a liquid leakage detector 10 for detecting leaked liquid in a battery system 100 (see FIG. 9) according to an embodiment of the disclosure. A flexible flat cable, FFC, 20 is used to provide the liquid leakage detector 10 according to the disclosure.

The liquid leakage detector 10 according to the disclosure includes the flexible flat cable, FFC, 20. The FFC 20 includes a first electrical conductor 22 and a second electrical conductor 24. The electrical conductors 22, 24 are indicated as dashed lines in FIG. 1. The first electrical conductor 22 and the second electrical conductor 24 extend parallel to each other. That means, a relative distance between the first electrical conductor 22 and the second electrical conductor 24 may be constant and may be predetermined. In other embodiments, the FFC 20 may include more than two electrical conductors 22, 24.

The liquid leakage detector 10 further includes an insulating layer 26, e.g. and insulating coating like a plastic coating. The insulating layer 26 encloses or at least partially encloses the first and the second electrical conductors 22, 24. Thus, the first and the second electrical conductors 22, 24 may be insulated from the environment by the insulating layer 26. The FFC 20 may extend in a straight direction. Thus, for example, a cable direction D1 may be straight direction. However, since the FFC 20 is flexible, the FFC 20 may include bent portions. Thus, the cable direction D1 may not be straight but may include curved portions. For example, the FFC 20 may be locally bent at edges in a housing 120 (see FIG. 9) or locally bent for circumventing battery units or battery subunits in the battery system 100 in the housing 120. Thus, the FFC 20 can be suitably integrated and arranged in the housing 120.

An electrical resistor 30 is located at a first end portion E1 (first end) of the FFC 20. The electrical resistor 30 is electrically connected with the first electrical conductor 22 and the second electrical conductor 24 at the first end portion E1. In other words, the electrical resistor 30 interconnects the electrical conductors 22, 24 with each other. Therefore, in response to applying an electrical voltage, an electrical current can flow through the electrical resistor 30 between the first electrical conductor 22 and the second electrical conductor 24 according to the resistance value R of the electrical resistor 30. In the present disclosure, the electrical resistor 30 may have a resistance value R between 100kΩ and 300kΩ, preferably between 100 kΩ and 250 kΩ, more preferably between 100kΩ and 200kΩ depending on the some embodiments.

The liquid leakage detector 10 further includes a first opening 27 in the insulating layer 26. The first opening 27 exposes the first electrical conductor 22 with respect to the insulating layer 26. The first opening 27 may be a cut-out in the insulating layer 26. Thereby, a first exposed portion 23 of the first electrical conductor 22 is provided with respect to the insulating layer 26. Further, the liquid leakage detector 10 includes a corresponding second opening 28 in the insulating layer 26. The second opening 28 exposes the second electrical conductor 24 with respect to the insulating layer 26. The second opening 28 may be a cut-out in the insulating layer 26. Thereby, a second exposed portion 25 of the second electrical conductor 24 is provided with respect to the insulating layer 26. The first exposed portion 23 and the second exposed portion 25 may form a pair of exposed portions P.

When liquid in the battery system 100, for example, coolant like water or water-based liquid, is leaked to an amount that continuously connects the exposed portions 23, 25 of the first electrical conductor 22 and the second electrical conductor 24 with each other, an electrical connection is formed between the exposed portions 23, 25 by the leaked liquid allowing a flow of electrical current.

Therefore, in such case, an electrical current can flow between the exposed portions 23, 25, i.e. between the pair P of exposed portions 23, 25, so that the liquid connection forms a liquid resistor R_{liq} that is parallel with respect to the electrical resistor 30. Thus, a voltage applied to such resistor circuit allows a current flowing through the liquid resistor and the electrical resistor 30 according to the resistor value R of the electrical resistor 30 and the resistor value R_{liq} between the exposed portions 23, 25 through the leaked liquid medium. In case of that there is no leaked liquid, no electrical current may flow between the exposed portions 23, 25 (resistance is very large) and an electrical current flows only through the electrical resistor 30.

The liquid leakage detector 10 includes a detection unit 40. The detection unit 40 is electrically connected to the first electrical conductor 22 and the second electrical conductor 24 at a second end portion E2 (second end) of the FFC 20 opposite to the first end portion E1. The detection unit 40 detects liquid by identifying an electrical current flowing between the pair P of exposed portions 23, 25 through the leaked liquid as electrically conductive medium. For example, a resistance drop or a current increase, e.g. with respect to thresholds, may be identified thereby detecting leaked liquid, i.e., a resistor value of the resistor circuit drops.

Therefore, as described above, through use of the FFC 20, in a cost-efficient manner and allowing flexible length variation, the leakage liquid detector 10 is provided which can detect liquid in the battery system 100 in an easy and practical manner. Since the FFC 20 has reduced thickness and high flexibility, the liquid leakage detector 10 can be easily installed in complex environment of the battery system 100 thereby increasing convenience for integration and during installation while requiring less space.

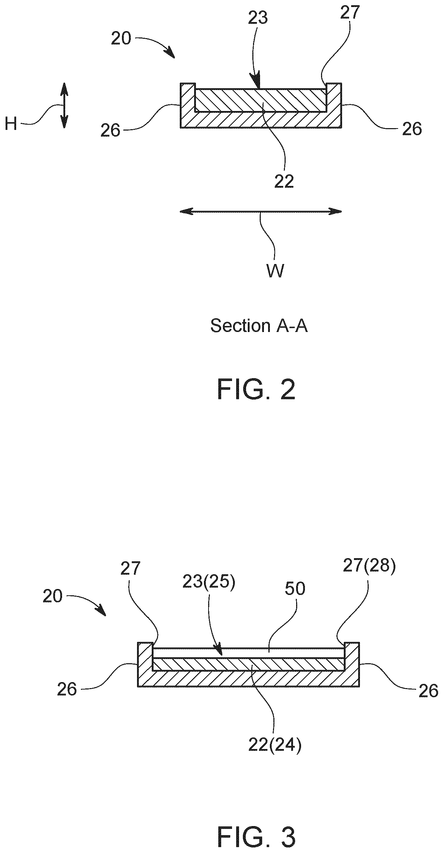

A cross section of the FFC 20 according to a cross section view A-A as indicated in FIG. 1 is shown in FIG. 2 according to an embodiment of the disclosure.

For example, as shown in the example of FIG. 2, the cross section of the FFC 20 may be rectangular. The cross section may include a width W and a height H, wherein the height H is shorter than the width W. Therefore, the liquid leakage detector 10 can be compactly integrated, for example, in a housing 120 of a battery system 100 and being compact in height. Also, rounded edges may be provided.

As shown in FIG. 1, the first opening 27 and the second opening 28 are formed, e.g. provided, on a same side. As shown in FIG. 1, the first opening 27 and the second opening 28 are formed on an upper side of the first and second electrical conductors 22, 24. Thus, a same height position is provided for both openings 27, 28. This allows to have an equal height level for detecting the leaked liquid and has an effect in defining a lower height threshold for detecting liquid thereby avoiding a false detection of minor amounts of leaked liquid. In the present embodiment, the first opening 27 and the second opening 28 (i.e., the first and second exposed portions 23, 25) are adjacent to each other but the present disclosure is not restricted thereto as will be described below.

Referring to FIG. 3, a cross section view of the FFC 20 according to section view A-A as indicated in FIG. 1 in accordance with another embodiment is provided. Only the differences with respect to the embodiment of FIG. 2 are provided and for overlapping information it is referred to above disclosure.

In this embodiment, the FFC 20 includes a water-soluble coating 50 (or water-soluble layer). The water-soluble coating 50 covers the exposed portions 23, 25 of the electrical conductors 22, 24. For example, the respective openings 27, 28 are covered by the water-soluble coating 50. Since leaked liquid requires a certain amount (threshold amount) of liquid (coolant like water or liquids that are hydrophilic and include water) to dissolve the water-soluble coating 50, small amounts of, for example, condensed water, may not dissolve the water-soluble coating 50 thereby not exposing the conductors 22, 24 at the openings 27, 28 with respect to the water-soluble coating 50. This makes the liquid leakage detector 10 more robust thereby avoid false positive detections based on minor amounts of liquid due to, for example, humidity. The liquid leakage detector 10 may thus discriminate a positive liquid leakage event from a case of mere water condensation or minor leakage thereby increasing the detection robustness. The water-soluble coating 50 may be of electrically insulating material.

In an example, the water-soluble coating 50 is a polyvinyl alcohol, PVA, tape. This can be easily attached to the electrical conductors 22, 24 and provides a good moisture barrier. In an embodiment, the water-soluble coating 50, e.g. the PVA, may be coated on the electrical conductors 22, 24 already in the manufacturing process of the FFC 20, for example by attaching water-soluble coating 50, e.g. the PVA, as a tape, e.g., double-sided tape.

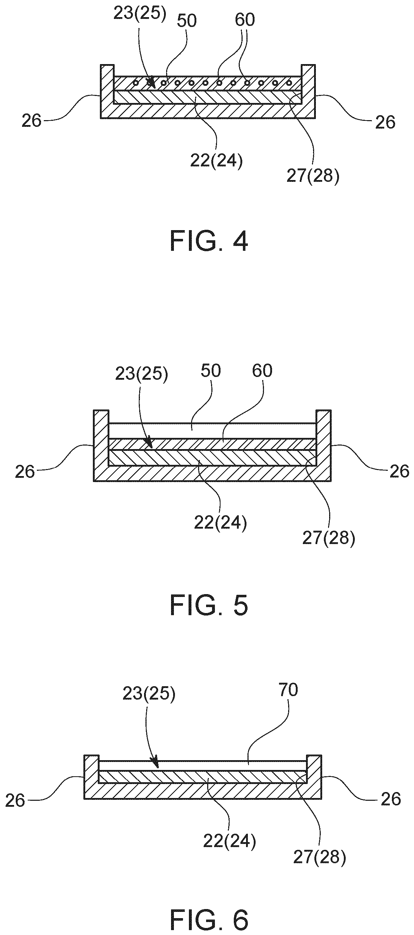

Referring to FIG. 4, a cross section view of the FFC 20 according to section A-A as indicated in FIG. 1 in accordance with yet another embodiment is provided. Only the differences with respect to the embodiment of FIG. 3 are provided.

In this embodiment, an ion releasing material 60 is provided at the openings 27, 28. The ion releasing material 60 releases ions, e.g. salt ions like NaCl or KCI but the disclosure is not restricted thereto, to the leaked liquid when the ion releasing material is dissolved by the leaked liquid. Thus, when the water-soluble coating 50 is dissolved, the electrical resistance between the exposed openings 27, 28 is reduced due to the release of ions into the liquid thereby increasing electrical conductivity (reducing electrical resistance). This may allow a reduction of the resistance value of the electrical resistor 30.

In this embodiment, the ion releasing material 60 may be included, i.e. integrated, in the water-soluble coating 50. Thus, during the process of dissolving the water-soluble coating 50, the electrical resistance between the exposed portions 23, 25 is reduced due to release of the ions in the water-soluble coating 50 at the same time. This may increase a rapidity of detecting leakage. In addition, the robust detection is maintained. This is since only when dissolving the water-soluble coating 50 occurs, the electrical resistance is then reduced by the dissolved ions between the exposed portions 23, 25.

Referring to FIG. 5, a cross section view of the FFC 20 according to a section A-A as indicated in FIG. 1 is shown in accordance with yet another embodiment. Only the differences with respect to the embodiment of FIG. 4 are explained in the following.

Also in this embodiment, an ion releasing material 60 is provided in the exposed portions 23, 25 of the electrical conductors 22, 24. The ion releasing material 60 releases ions to the liquid when being dissolved by the liquid. Thus, when the water-soluble coating 50 is dissolved, the electrical resistance between the exposed openings 27, 28 is reduced (electrical conductivity increased) due to the release of ions.

Here, in this embodiment, the ion releasing material 60 is disposed between the water-soluble coating 50 and the respective conductor 22, 24, i.e. in other words, below or under the water-soluble coating 50. Thus, the ion releasing material 60 is separately provided with respect to the water-soluble coating 50. When the water-soluble coating 50 is dissolved, the electrical resistance between the exposed openings 27, 28 is reduced due to release of ions from the ion releasing material 60. Since the ion releasing material 60 is separately provided, the dissolving properties of the water-soluble coating 50 may not be affected and more conventional water-soluble coating 50 can be used which eases manufacturing.

In an example, the ion releasing material 60 includes a salt material. For example, sodium chloride NaCl or potassium chloride KCl may be used. For example, the ion releasing material 60 may be provided as a coating or a powder.

Referring to the embodiment of FIG. 6, a cross section view of the FFC 20 according to section A-A as indicated in FIG. 1 in accordance with yet another embodiment is shown. Only the differences with respect to the embodiments of FIG. 2 are described. The present embodiment can be combined with the embodiments of FIGS. 3 to 5.

In this embodiment, a corrosion protection layer 70 is disposed directly on the respective electrical conductors 22, 24. The corrosion protection layer 70 may be provided at the first and second exposed portions 23, 25, i.e., at the opening 27, 28. For example, the corrosion protection layer 70 is a coating including at least one of gold, tin and/or nickel which may improve corrosion protection. Since the corrosion protection layer 70 is provided, oxidation of the exposed portions 23, 25 of the electrical conductors 22, 24 is prevented or at least significantly reduced. Therefore, even materials with rapid oxidation rates when, for example, being exposed to air may be used. For example, in an embodiment, copper may be used but as well aluminum may be used as material for the electrical conductors 22, 24.

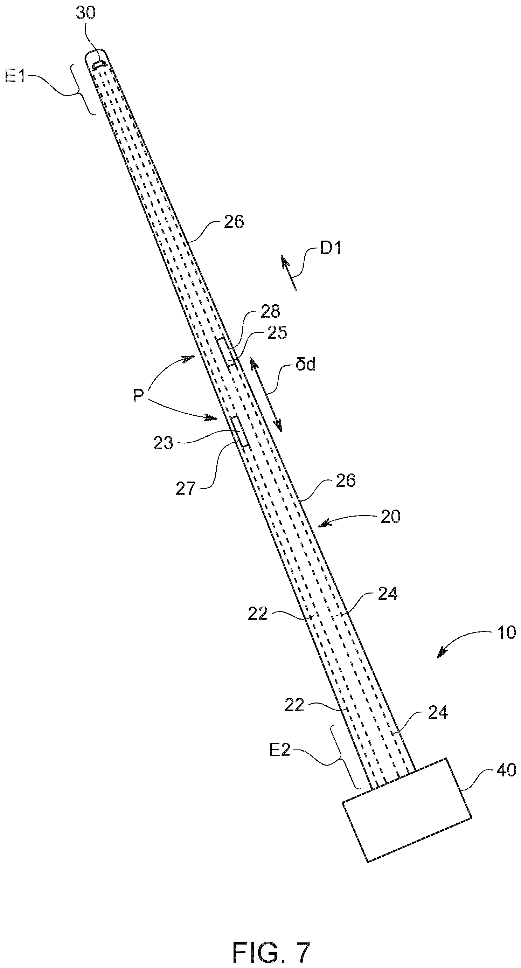

FIG. 7 illustrates a schematic view of a liquid leakage detector 10 according to another embodiment. In this embodiment, only the differences with respect to the embodiment of FIG.1 are described in the following. The present embodiment can be combined with the embodiments of FIGS. 2 to 6.

In this embodiment, the first and the second openings 27, 28 (or the exposed portions 23, 25) are displaced from each other by a displacement difference δd in cable direction D1. For example, the first and the second openings 27, 28 (or the exposed portions 23, 25) forming the pair P of exposed portions 23, 25 is shifted in location with respect to one another by the displacement difference δd in cable direction D1.

Therefore, in this embodiment, the first and the second openings 27, 28 (or the exposed portions 23, 25) are not directly adjacent to each other, but are displaced, e.g. spaced, from each other in cable direction D1. This has an effect in avoiding false positive detections based on only minor amounts of liquid due to, for example, humidity and condensed water. For example, due to the displacement difference δd, a condensed liquid or a small amount of leaked liquid may not be capable of fully connecting the exposed portions 23, 25. Thus, the leaked liquid detector 10 has increased detection robustness for detecting leakage events discriminatively from mere humidity, condensed water or minor leakage.

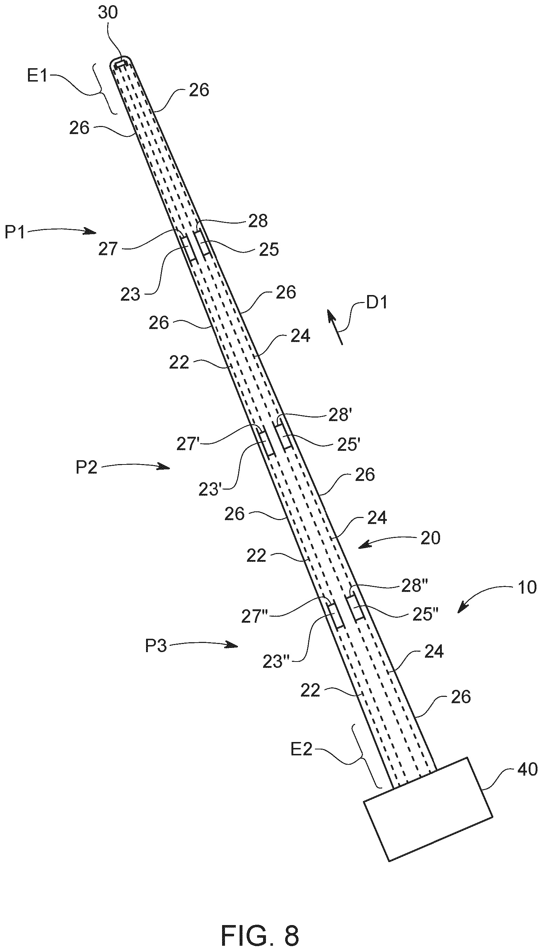

FIG. 8 illustrates a schematic view of the liquid leakage detector 10 according to another embodiment. Only the differences with respect to the embodiment of FIG.1 are described in the following. The present embodiment can be combined with the embodiments of FIGS. 2 to 7.

In this embodiment, the liquid leakage detector 10 includes a plurality of openings 27, 28; 27', 28'; 27", 28" (or equally first and second exposed portions 23, 25; 23', 25'; 23", 25"). The plurality of openings 27, 28; 27', 28'; 27", 28" (or equally first and second exposed portions 23, 25; 23', 25'; 23", 25") is provided along the cable direction D1. Therefore, a plurality of respective pairs, P1, P2, P3 of exposed portions 23, 25; 23', 25'; 23", 25" is provide ad different locations. The pairs P1, P2, P2 may be provided according to FIG. 1 (as shown in the present FIG. 8) without displacement or as shown in FIG.7 with displacement difference δd. The pairs of insulator-exposing openings P1, P2, P3 may be spaced along the cable direction D1, respectively. Each of the pairs P1, P2, P3 then refers to a location where liquid leakage sensing is performed. For example, a first pair P1 may be electrically conductive for liquid while the other pairs P2, P3 may not be electrically conductive. Thus, with only one FFC 20 and one electrical resistor 30, multiple different locations can be sensed for leaked liquid.

Therefore, an advantage is that despite of the multiple measurement points (multiple pairs P1, P2, P3) that allow to detect liquid at various positions, only one electrical resistor 30 and one FFC 20 is required thereby drastically reducing installation effort, material requirements and material costs. For example, in comparable embodiments of the prior arts, the number of sensing locations may scale with the number of electrical resistors and harnesses while in the present disclosure only one resistor or FFC 20 is required.

FIG. 9 shows schematically a battery system 100 according to an embodiment. The battery system 100 includes a plurality of battery cells 110. The battery cells 110 are accommodated within a housing 120. The battery cells 110 may be arranged in a predetermined order. A liquid leakage detector 10 according to the above-described embodiments is disposed within the housing 120.

For example, the liquid leakage detector 10 may be provided on a bottom surface, e.g. on a bottom plate, of the housing 120. According to the above, the liquid leakage detector 10 based on the FFC 20 can be easily integrated and installed into the battery system 100. In examples, the battery system 100 may include a battery pack or a battery module.

In summary, a liquid leakage detector 10 for detecting liquid in a battery system is provided which is easy to install and integrated and is very cost-efficient. As well, the sensing robustness can be improved and detection time increased according to various embodiments as described above. Further advantages are disclosed above or can be derived from the above disclosure.

### Reference signs

- 10: liquid leakage detector

- 20: flexible flat cable (FFC)
- 22: first electrical conductor
- 23, 23', 23": first exposed portion
- 24: second electrical conductor
- 25, 25', 25": second exposed portion
- 26: insulating layer
- 27, 27', 27": first opening
- 28, 28, 28": second opening

- P: pair of exposed portions
- P1, P2, P3: pairs of exposed portions

- E1: first end portion
- E2: second end portion

- 30: electrical resistor

- 40: detection unit

- 50: water-soluble coating

- 60: ion releasing material

- 70: corrosion protection layer

- D1: cable direction
- W: width
- H: height
- 100: battery system
- 110: battery cell
- 120: housing

## Claims

1. A liquid leakage detector (10) for detecting liquid in a battery system, comprising:
a flexible flat cable, FFC, (20), comprising:
a first electrical conductor (22) and a second electrical conductor (24) extending parallel to each other;
an insulating layer (26) at least partially enclosing the first and/or the second electrical conductor (22, 24);
an electrical resistor (30) located at a first end portion (E1) of the FFC (20) electrically connected with the first electrical conductor (22) and the second electrical conductor (24) at the first end portion (E1);
a first opening (27) in the insulating layer (26) providing a first exposed portion (23) of the first electrical conductor (22) with respect to the insulating layer (26) and a second opening (28) in the insulating layer (26) providing a second exposed portion (25) of the second electrical conductor (24) with respect to the insulating layer (26); and
a detection unit (40) electrically connected to the first electrical conductor (22) and the second electrical conductor (24) at a second end portion (E2) opposite to the first end portion (E1), the detection unit (40) configured to detect liquid based on identifying an electrical current flowing between the first exposed portion (23) and the second exposed portion (25) via the liquid.

2. The liquid leakage detector (10) as claimed in claim 1, wherein a cross section of the FFC (20) and/or the first and second electrical conductors (22, 24) is rectangular comprising a width (W) and a height (H), wherein the height (H) is shorter than the width (W).

3. The liquid leakage detector (10) as claimed in any one of the claims 1 to 2, further comprising a water-soluble coating (50) covering the first exposed portion (23) and the second exposed portion (25).

4. The liquid leakage detector (10) as claimed in claim 3, wherein the water-soluble coating (50) comprises a polyvinyl alcohol, PVA, tape.

5. The liquid leakage detector (10) as claimed in any one of the claims 1 to 4, further comprising an ion releasing material (60) at or in the openings (27, 28), the ion releasing material (60) configured to release ions to the liquid when being dissolved by the liquid.

6. The liquid leakage detector (10) as claimed in claim 5, when dependent on claim 3 or 4, wherein the ion releasing material (60) is disposed between the water-soluble coating (50) and the respectively exposed portion (23, 25).

7. The liquid leakage detector (10) as claimed in any one of the claims 5 to 6, wherein the ion releasing material (60) comprises a salt material.

8. The liquid leakage detector (10) as claimed in any one of the claims 5 to 7, wherein the ion releasing material (60) is a coating and/or a powder.

9. The liquid leakage detector (10) as claimed in any one of the claims 5 to 8, wherein the ion releasing material (60) is included in the water-soluble coating (50).

10. The liquid leakage detector (10) as claimed in any one of the claims 1 to 9, further comprising a corrosion protection layer (70) disposed directly on the first exposed portion (23) and the second exposed portion (25).

11. The liquid leakage detector (10) as claimed in claim 10, wherein the corrosion protection layer (70) is a coating comprising at least one of gold, tin and/or nickel.

12. The liquid leakage detector (10) as claimed in any one of the claims 1 to 11, wherein the first and the second openings (27, 28) are displaced from each other by a displacement difference (δd) with respect to a cable direction (D1).

13. The liquid leakage detector (10) as claimed in any one of the claims 1 to 12, wherein the first and second electrical conductors (22, 24) each comprises a plurality of openings (27, 27'; 27", 28; 28', 28") along the cable direction (D1) respectively providing a plurality of pairs of exposed portions (P1, P2, P3).

14. The liquid leakage detector (10) as claimed in any one of the claims 1 to 13, wherein the electrical resistor (30) has a resistance value between 100kΩ and 300kΩ.

15. A battery system (100), comprising:
a plurality of battery cells (110) accommodated within a housing (120);
a liquid leakage detector (10) as claimed in any of the claims 1 to 14 within the housing (120).
